# EUROPEAN PATENT SPECIFICATION

(11) **EP 3 351 722 B1**
(45) Date of publication and mention of the grant of the patent: **08.05.2019**
(21) Application number: 17152031.5
(22) Date of filing: 18.01.2017
(51) Int. Cl.: E21B 29/00, B23D 21/14

(54) **UNDERWATER CUTTING APPARATUS**
UNTERWASSERSCHNEIDVORRICHTUNG
APPAREIL DE DÉCOUPE EN IMMERSION

(43) Date of publication of application: 25.07.2018
(73) Proprietor: Underwater Cutting Solutions Limited, Newcastle upon Tyne Tyne and Wear NE13 6PH (GB)
(72) Inventor: Wraith, Ronald, Newcastle upon Tyne, Tyne and Wear, NE13 6PH (GB)
(74) Representative: Vinsome, Rex Martin

(56) References cited:
- WO-A1-2008/118716
- WO-A1-2015/001194
- US-A- 1 941 703
- US-A- 2 842 843
- US-A- 4 521 264

## Description

The present disclosure relates to an apparatus for cutting pipe and relates particularly, but not exclusively, to an apparatus for cutting of internal steel pipes, caissons, multi-strings, wellbores, spools, structures, and underwater pipelines. The present disclosure also relates to blades for use in such apparatus.

Underwater cutting tools for cutting internal pipes at or below the sea bed include mechanical cutting apparatus, such as circular saws, milling tools and abrasive water-jet cutting apparatus, which use high-speed water jets containing abrasive particles.

Abrasive water-jet cutting systems are commonly used for subsea cutting operations, however these apparatus require a cutting area to be dewatered before cutting can take place in order to prevent limitation of cutting distance by the water surrounding the tool. This means that additional apparatus is required to seal the cutting area and remove water from the cutting area before cutting can take place. This increases operation time and expense in addition to requiring additional expertise for operation of the water-removal apparatus.

Cutting depth, or blade penetration, of known cutting apparatus is limited by tool diameter, particularly in the case of mechanical cutting apparatus such as those employing circular saws and milling tools. As a result, when a particularly thick pipe or a sequence of concentrically-arranged pipes - such as a multi-string of pipes - are to be cut, a number of cutting tools of increasing size must be sequentially deployed into the pipe interiors to effect cutting of the entire pipe or all of the plurality of pipes. This increases the amount of hardware that is required to complete the cutting operation and further increases operating time and costs. Furthermore, each sequentially-deployed tool must be accurately aligned at the previous tool's cutting location to effect a successful cutting operation, increasing operation complexity.

US 4521264 A discloses a method and apparatus for the formation of tubular segments from a generally continuous tube of material by internally cutting the tube of material.

Preferred embodiments of the present invention seek to overcome one or more disadvantages of the prior art.

According to a first aspect of the present invention, there is provided an apparatus for cutting pipe, comprising: drive means; and a cutting assembly, comprising: a first mounting portion; at least one blade, mounted to the first mounting portion, the at least one blade comprising a cutting portion at a first end and a flexible portion between the first end and the first mounting portion; and guide means for guiding the at least one blade, the flexible portion being configured to flex where the flexible portion engages the guide means; wherein the drive means is configured to: (i) cause the at least one said blade to rotate about a rotation axis; and (ii) move the first mounting portion to cause the at least one blade to move along the guide means between a deployed condition and a retracted condition, wherein each cutting portion in the deployed condition is arranged radially further outwards, in a direction transverse to said rotation axis, than in the retracted condition, wherein at least one blade comprises a plurality of laminated strips and pluralities of notches and foldable tabs for forming joints between the strips.

By providing a cutting apparatus having one or more flexible blades that are stored axially and which extend radially, a comparatively large cutting radius is achieved by an apparatus of a particular diameter, thereby providing the advantage that thicker-walled pipes having narrow inner dimensions can be cut more effectively. By providing at least one blade with a plurality of laminated strips, the advantage of increasing the rigidity of the blades for a given blade thickness is provided, thereby enabling a more effective cutting action to be performed while maintaining a desired blade thickness. By providing at least one blade with pluralities of notches and foldable tabs for forming joints between the strips, the locations and dimensions of the notches and corresponding foldable tabs may be freely chosen, which provides the advantage of enabling the flexibility and rigidity of the blades to be tailored.

At least one blade may comprise: a first strip comprising a plurality of foldable tabs; and at least one second strip comprising a plurality of notches; wherein a plurality of said tabs are configured to engage at least one said second strip by folding around a respective portion of at least one said second strip located in a respective notch to allow limited relative movement of at least part of said strips.

By providing a blade comprising a first strip comprising a plurality of foldable tabs and at least one second strip comprising a plurality of notches, wherein a plurality of said tabs are configured to engage at least one said second strip by folding around a respective portion of at least one said second strip located in a respective notch, the advantage is provided that the strips may be attached to one another such that flexibility and/or rigidity of portions of the blade comprising the tabs and notches can be tailored in a simple and cost-effective manner.

The first strip may further comprise a plurality of notches; and at least one further strip may further comprise a plurality of foldable tabs.

This provides the advantage that the strips may be more securely attachable to one another.

At least one said second strip may be a central strip comprising a plurality of notches, wherein: (i) the at least one central strip may be located between the first and second strips; and (ii) at least one foldable tab may be configured to fold around a portion of at least one respective notch of a central strip to engage at least one central strip.

This provides the advantage of enabling the foldable tabs to sit flush with the exterior surfaces of the first and second strips.

At least one foldable tab may be configured to fold about an axis transverse to a longitudinal axis of the blade, thereby forming a first-type joint.

This provides the advantage of allowing the flexion characteristics of a portion of the blade having the first-type joints to be arbitrarily altered.

At least one foldable tab may be configured to fold about an axis parallel to a longitudinal axis of the blade, thereby forming a second-type joint.

This provides the advantage of allowing the flexion characteristics of a portion of the blade having the second-type joints to be arbitrarily altered.

At an end of the blade, the first strip and an adjacent further strip may be arranged to define a space therebetween, the space configured to receive a cutting device.

This provides the advantage of providing a simple mechanism for attaching a cutting device to the blade.

In the retracted condition, at least part of the blade may be located behind the rotation axis relative to the location of the cutting portion when in the deployed condition.

The first and further strips may be tempered prior to assembly.

This provides the advantage of increasing the likelihood of obtaining a blade having desired mechanical characteristics.

The drive means may comprise a gearbox and leadscrew for actuating the cutting assembly.

This provides the advantage of providing a simple mechanism for extending and retracting the blades.

The apparatus may further comprise a casing comprising at least one aperture for allowing passage of the at least one blade therethrough between the deployed and retracted conditions.

This provides the advantage of reducing exposure of the innards of the apparatus to the environment, thereby preventing damage.

The apparatus may further comprise at least one guide rail for coupling the cutting assembly to an interior of the casing.

This provides the advantage of ensuring consistent axial movement of the cutting assembly relative to the casing.

The apparatus may comprise a plurality of blades arranged substantially symmetrically relative to the rotation axis. This provides the advantage that net reaction force from inner walls of a pipe being cut on the apparatus is minimised, thereby centralising the apparatus within the inner diameter of the pipe and stabilising the apparatus.

At least one blade may be 4 millimetres thick. At least one blade may comprise steel.

Embodiments of the present invention will now be described, by way of example only and not in any limitative sense, with respect to the accompanying drawings, in which:
Figure 1 shows a cross-sectional side view of a cutting apparatus of a first embodiment of the present invention in a retracted condition;
Figure 2 shows a cross-sectional side view of the apparatus of Figure 1 in a first deployed condition;
Figure 3 shows a cross-sectional side view of the apparatus of Figure 1 in a second deployed condition;
Figure 4 shows an enlarged cross-sectional perspective view of a portion of the apparatus of Figure 1 in the first deployed condition;
Figure 5 shows a first cut-away perspective view of a cutting apparatus of a second embodiment of the present invention;
Figure 6 shows a second cut-away perspective view of the apparatus of Figure 5;
Figure 7 shows an enlarged cut-away perspective view of a portion of the apparatus of Figure 5;
Figure 8 shows a cross-sectional view of the portion of the apparatus of Figure 7;
Figure 9(a) shows a perspective view of a blade of a third embodiment of the present invention in an assembled state;
Figure 9(b) shows a close-up perspective view of the blade of Figure 9(a);
Figure 9(c) shows a transparent plan view of the blade of Figure 9(a);
Figure 9(d) shows a close-up transparent perspective view of the blade of Figure 9(a);Figure 9(e) shows an exploded view of the blade of Figure 9(a) in a disassembled state;
Figure 9(f) shows a close-up transparent perspective view of the blade of Figure 9(a) in a disassembled state;
Figure 10(a) shows a perspective view of a blade of a fourth embodiment of the present invention in an assembled state;
Figure 10(b) shows a close-up perspective view of the blade of Figure 10(a);
Figure 10(c) shows a transparent plan view of the blade of Figure 10(a);
Figure 10(d) shows a close-up transparent perspective view of the blade of Figure 10(a);
Figure 10(e) shows an exploded view of the blade of Figure 10(a) in a disassembled state;
Figure 10(f) shows a close-up transparent perspective view of the blade of Figure 10(a) in a disassembled state;
Figure 11(a) shows perspective and plan views of a blade of a fifth embodiment of the present invention in an assembled state;
Figure 11(b) shows a close-up perspective view of the blade of Figure 11(a);
Figure 11(c) shows transparent views of first and second strips of the blade of Figure 11(a) in a first state;
Figure 11(d) shows the strips of Figure 11(c) in a second state;
Figure 11(e) shows an exploded perspective view of the blade of Figure 10(a) in the second state;
Figure 11(f) shows perspective and plan views of the blade of Figure 11(a) in a third state;
Figure 11(g) shows a close-up view of a portion of the blade of Figure 11(f); and
Figure 12 shows a close-up perspective view of an end of the blade of Figure 10(a).

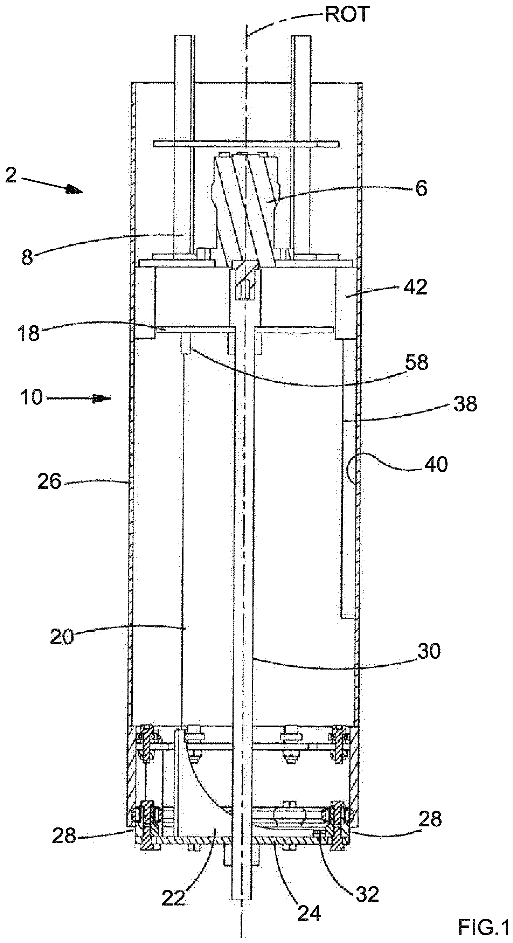

Referring to Figures 1 to 8, an apparatus 2 for cutting pipe is shown comprising drive means 4, in the form of a motor 6, mounted to a mounting frame 8 of a cutting assembly 10, and a gearbox-leadscrew assembly 12, comprising a gearbox 14 and a leadscrew 16 in mechanical communication with the cutting assembly 10.

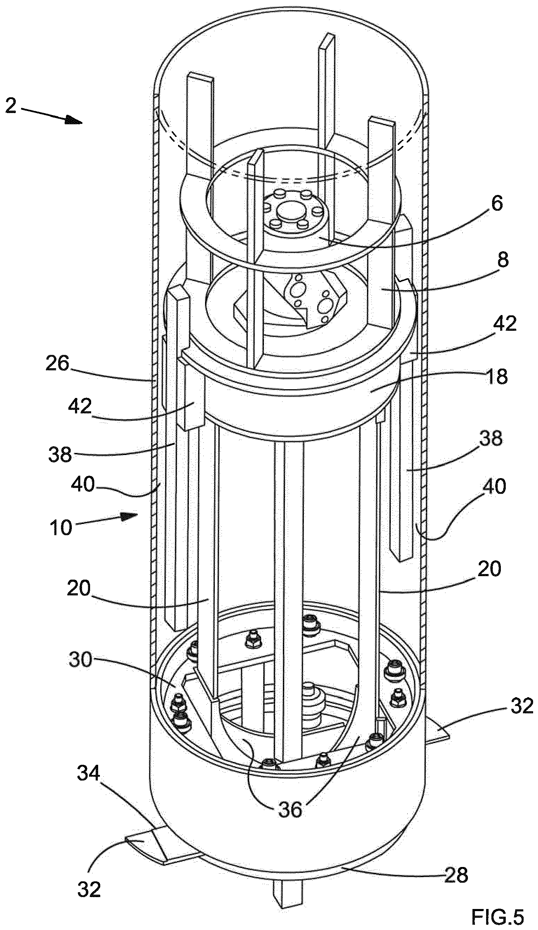

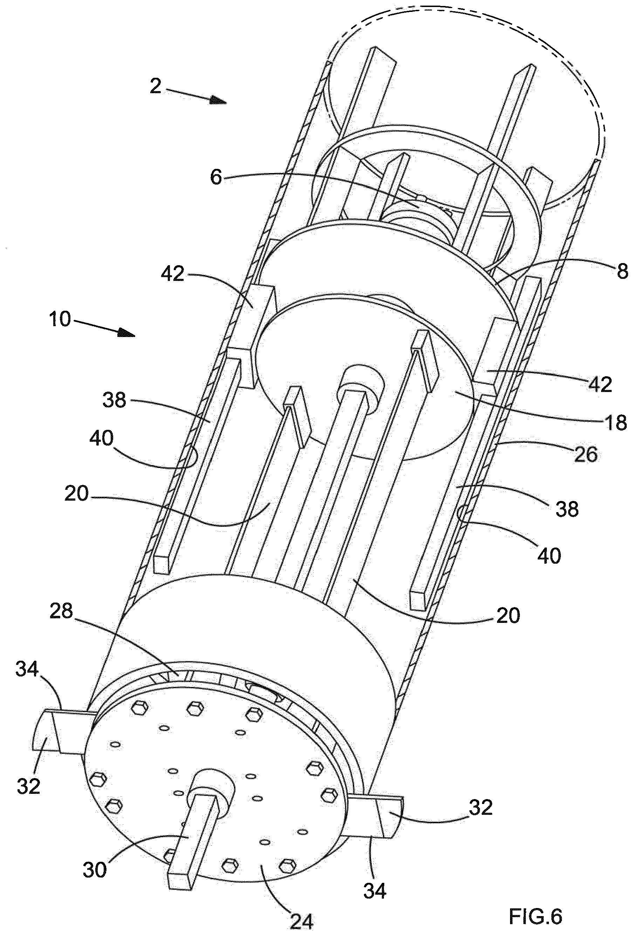

The cutting assembly 10 is shown comprising a mounting portion in the form of a mounting plate 18, a blade 20 (Figures 1 to 4) or two blades 20 (Figures 5 and 6) fixed thereto, and guide means in the form of a ramp 22 (Figures 1 to 4) or two ramps 22 (Figures 5 and 6) mounted to a base portion 24.

The apparatus is shown comprising a casing 26, which encloses the drive means 4 and cutting assembly 10, and an aperture 28, through which the at least one blade 20 can pass.

The motor 6 is shown connected to an axle 30, driveable by the motor 6, which is connected to the mounting plate 18 and to the base portion 24. The cutting assembly 10 can therefore be seen to be rotatable via the axle, by the motor 6, relative to the casing 26 and to the mounting frame 8 about a rotation axis ROT.

The at least one blade 20 is shown comprising a cutting portion 32, at a first end 34, and a flexible portion 36, between the cutting portion 32 and the mounting frame 8, the flexible portion 36 being configured to flex where it engages the at least one ramp 22. This enables storage of a length of the at least one blade 20 along the rotation axis ROT within the apparatus 2 while enabling extension of the at least one blade 20 along a radial axis transverse to the rotation axis ROT, thereby enabling a narrower apparatus to have a greater maximum cutting radius and greater range of cutting radii. As a consequence of enabling a narrower tool to have a greater cutting radius, pipes to be cut having narrower internal radii and thicker walls may be cut, and/or a number of concentrically-arranged pipes may be cut during a single deployment of the apparatus. At least one blade 20 may have a total length greater than an internal diameter of a pipe to be cut.

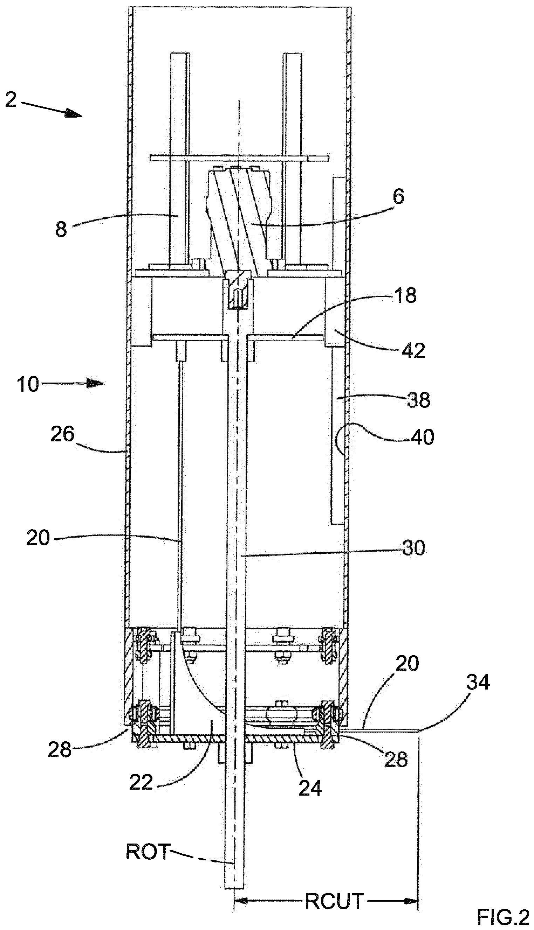

In Figure 1, a first embodiment of the apparatus 2 is shown, wherein the blade 20 is shown in a retracted condition, wherein the cutting portion 32 is held closer to the ramp 22 than in the deployed conditions of Figures 2 to 4. Preferably, in the retracted condition, the entirety of the blade 20 is located within the casing 26, thereby preventing the cutting portion 32 from engaging with any objects proximal to the apparatus 2. In the retracted condition, at least part of the blade 20 is located behind the rotation axis ROT relative to the location of the cutting portion 32 when in the extended condition.

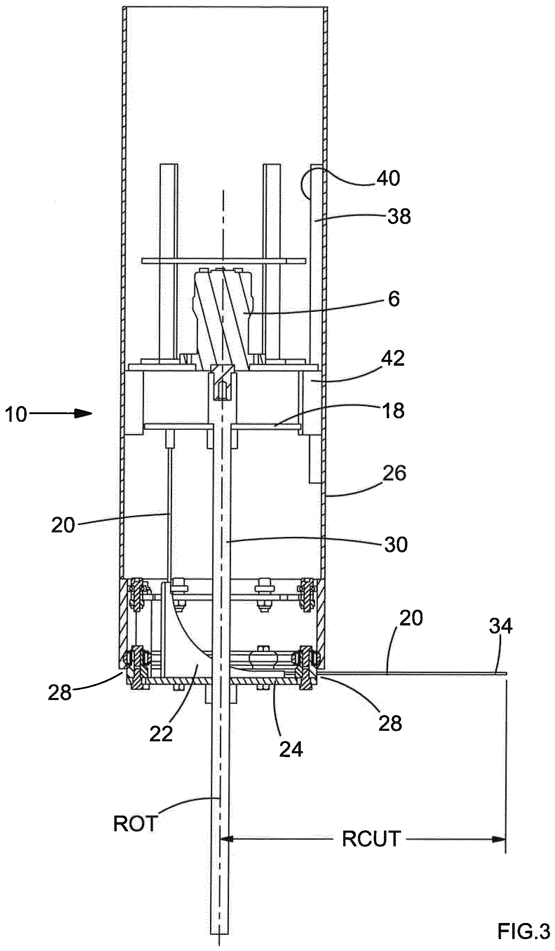

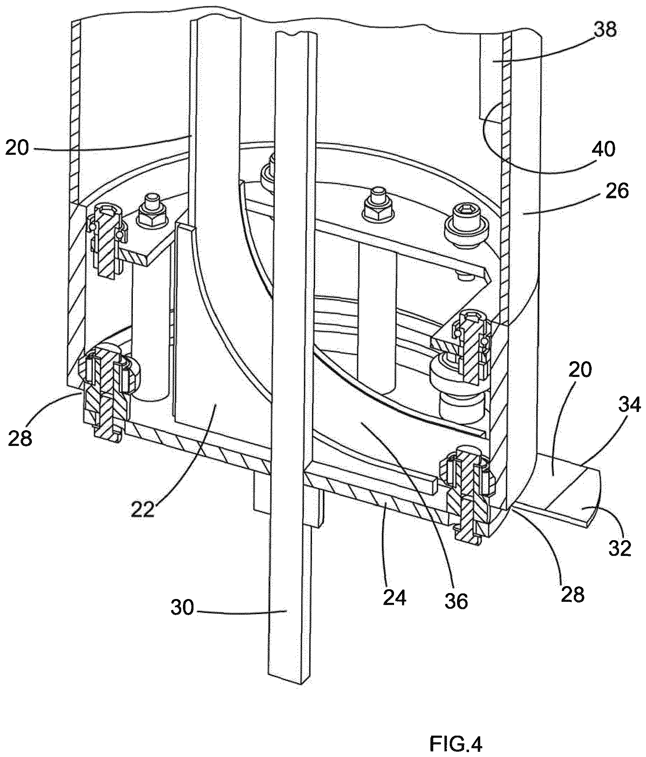

In Figures 2 to 4, the blade 20 is shown in two respective deployed conditions wherein the blade 20 is extended, so that the cutting portion 32 is correspondingly extended outwardly from the rotation axis ROT along the radial axis. A cutting radius RCUT is shown increasing from the first deployed state (Figures 2, 4) to the second deployed state (Figure 3).

In Figures 1 to 3, a guide rail 38 is shown fixed to an inner surface 40 of the casing 26 and a respective guide portion 42, adapted to slidably engage with the guide rail 38, is shown fixed to the mounting frame 8. The guide rail 38 and guide portion 42 prevent rotational motion of the mounting frame 8 relative to the casing 26 while allowing axial motion of the mounting frame 8 relative to the casing 26 and to the base portion 24.

Referring to Figures 5 and 6, a second embodiment of the apparatus 2 is shown having two blades 20 and two respective guide ramps 22. In this embodiment, the blades 20 are arranged symmetrically around the rotation axis ROT and are shown to have equal length, so that the cutting portions 32 of each blade 2 are also arranged symmetrically around the rotation axis ROT. A symmetrical arrangement exemplified by this embodiment allows the cutting portions 32 to meet opposite locations of an inner surface of an annular cylinder to be cut, thereby causing a centralising restoring force to be applied by the cylinder on the apparatus 2.

In Figures 5 and 6, two guide rails 38 are shown fixed to the inner surface 40 of the casing 26 and two respective guide portions 42 are shown fixed to the mounting frame 8. The guide rails 38 and guide portions 42 prevent rotational motion of the mounting frame 8 relative to the casing 26 while allowing axial motion of the mounting frame 8 relative to the casing 26 and to the base portion 24.

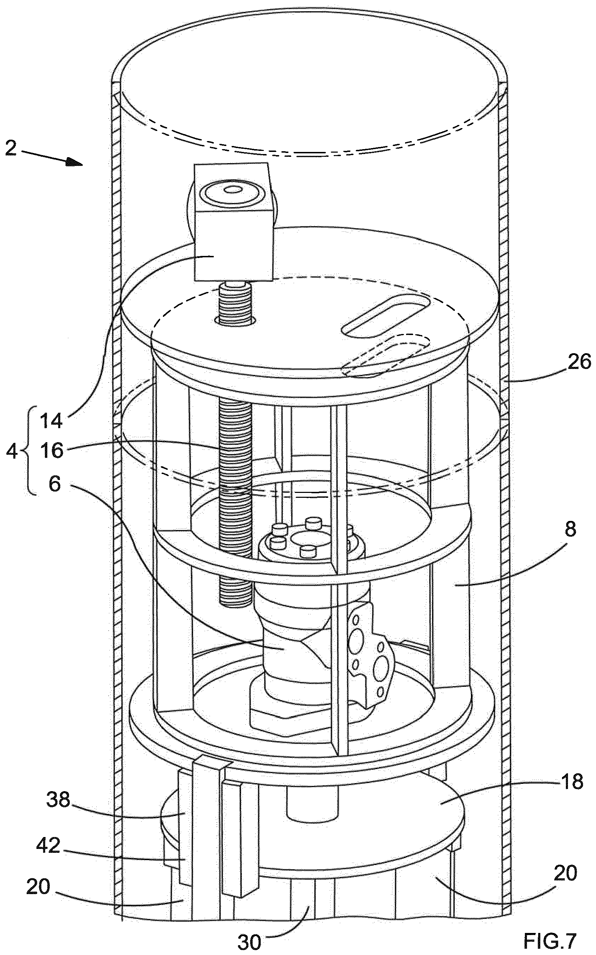

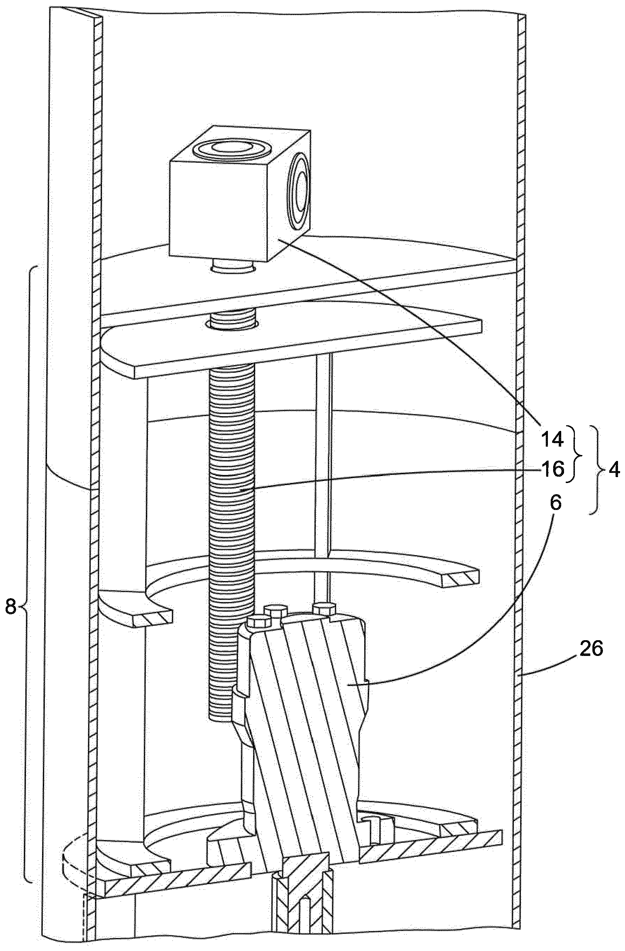

As shown in Figures 7 and 8, the leadscrew 16 is rotatable in a helical manner by the gearbox 14, and therefore the gearbox-leadscrew assembly 12 is capable of applying a force to the mounting frame 8 along an axis parallel to the rotation axis ROT so as to move the mounting frame 8 and mounting plate 18 towards or away from the base portion 24. As the mounting plate 18 moves axially, the at least one blade 20 is pushed or pulled along an axis parallel to the rotation axis ROT, the flexible portion 36 of the at least one blade 20 slides along the at least one ramp 32, and the at least one cutting portion 32 radially extends or retracts a corresponding distance.

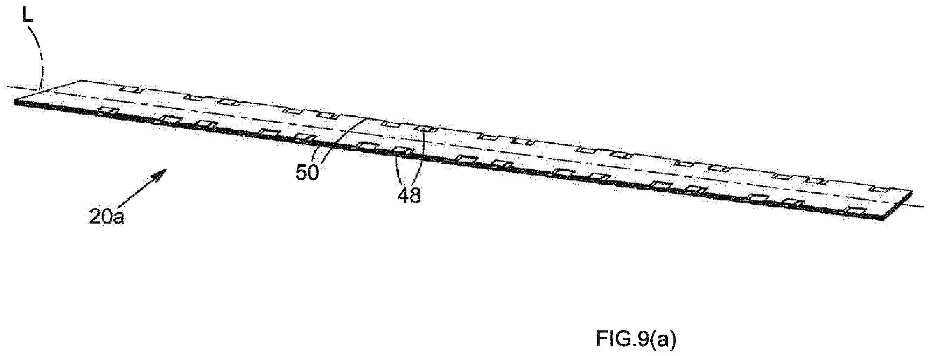

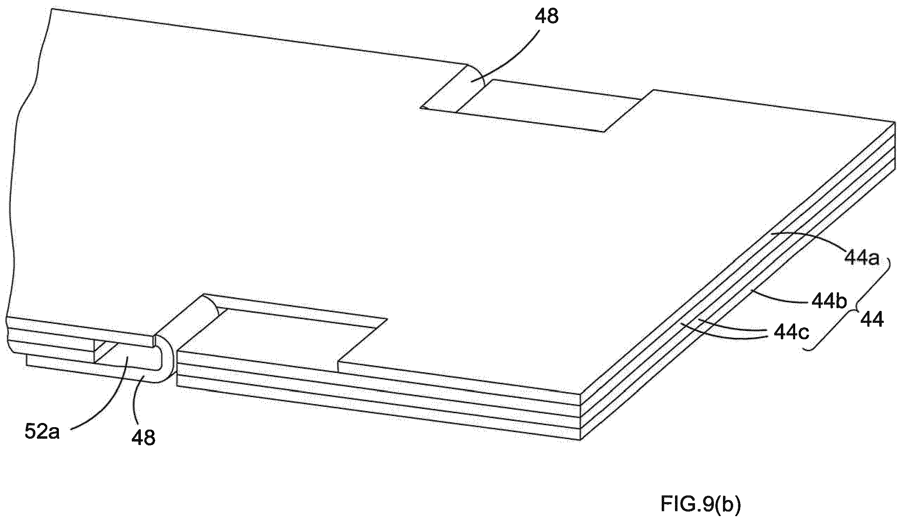

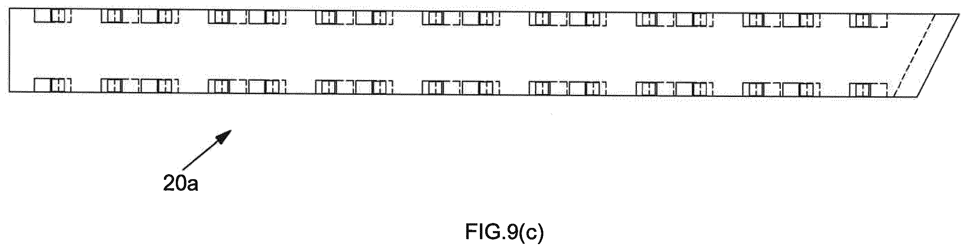

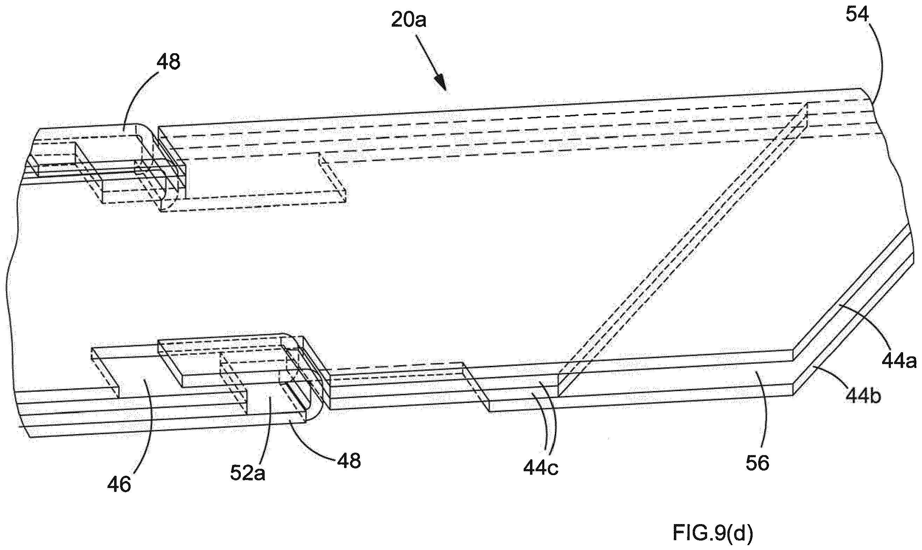

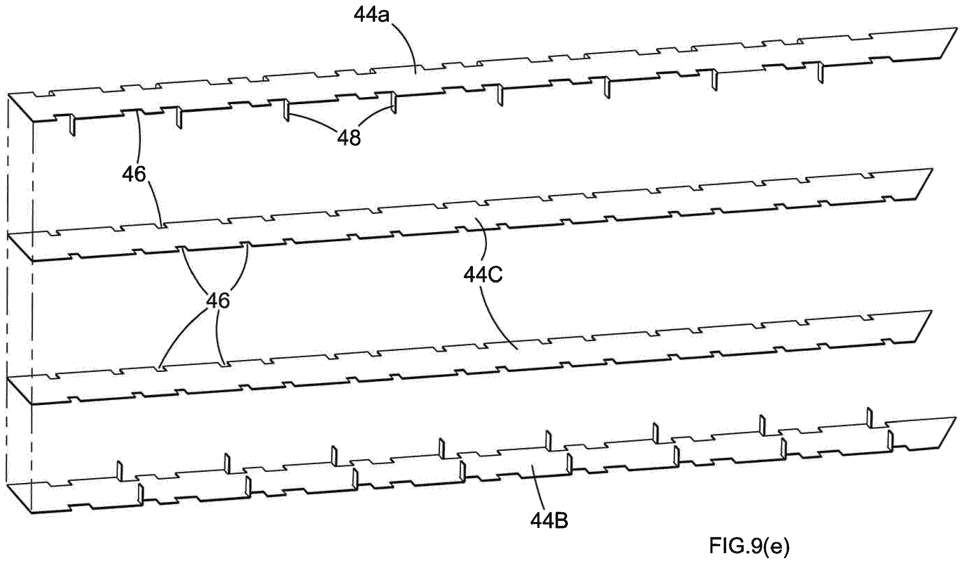

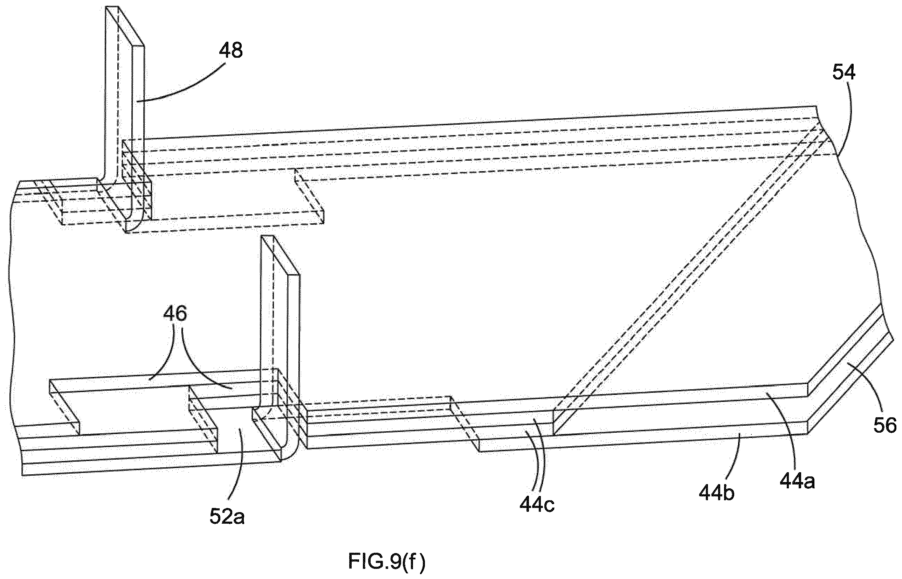

Referring to Figures 9, a third embodiment of the present invention is shown in the form of a flexible blade 20a (Figure 9) suitable for use in any embodiment of apparatus 2 described above, the blade 20a comprising four strips 44: a first strip 44a, a second strip 44b, and two central strips 44c. Each of the first and second strips 44a, 44b comprises pluralities of notches 46 and foldable tabs 48 located along each long edge 50 of the first and second strips 44a, 44b. The central strips comprise a plurality of notches 46, around which respective foldable tabs 48 may be folded. To assemble a blade 20, the strips 44 are stacked and the foldable tabs 48 are folded around a respective portion of another strip, such as the notches 46 of central strips 44c, to hold the strips together. Blade 20a is configured to flex about a flexion axis transverse to a long axis L of the blade.

Figure 9(b) shows a close-up view of an assembled blade 20a, wherein one of the plurality of foldable tabs 48 can be seen to have been folded about an axis transverse to the long axis L (Figure 9(a)) of the blade 20a around respective notches 46 of two central strips 44c, thereby forming a first-type joint holding the strips 44 together while leaving a gap 52a which facilitates flexion of the assembled blade 20a by allowing relative movement of the assembled strips 44 in directions substantially parallel to long axis L. This gap may also be seen in Figures 9(d) and 9(f).

Figure 9(e) shows an exploded view of all four strips 44 of the blade 20a of Figure 9(a), wherein notches 46 of the central strips 44c, around which respective foldable tabs 48 are to be folded, can be seen. Shown in both Figures 9(e) and 9(f) is an arrangement of the pluralities of foldable tabs 48 (prior to folding) and notches 46 of the first and second strips 44a, 44b.

Figures 9(d) and 9(f) each show a close-up view of an end 54 of the blade 20a of Figure 9(a), at which a space 56 between the first and second strips 44a, 44b is located. The space 56 is defined by termination of the central strips 44c prior to termination of the first and second strips 44a, 44b, and is arranged to receive a cutting device such as the cutting portion 32.

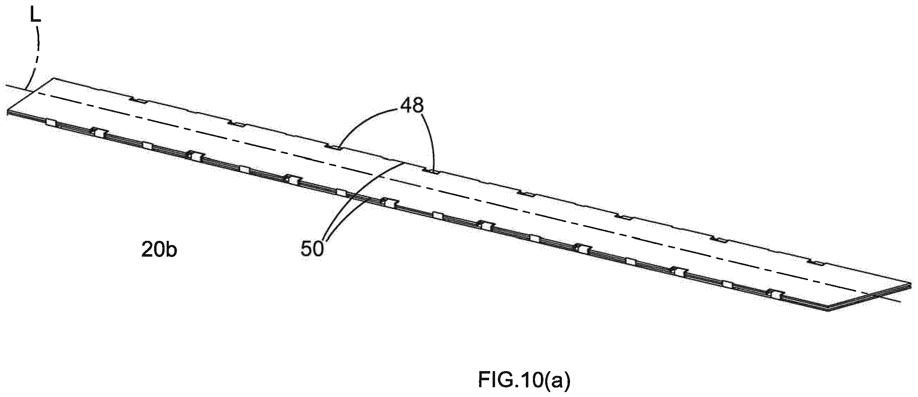

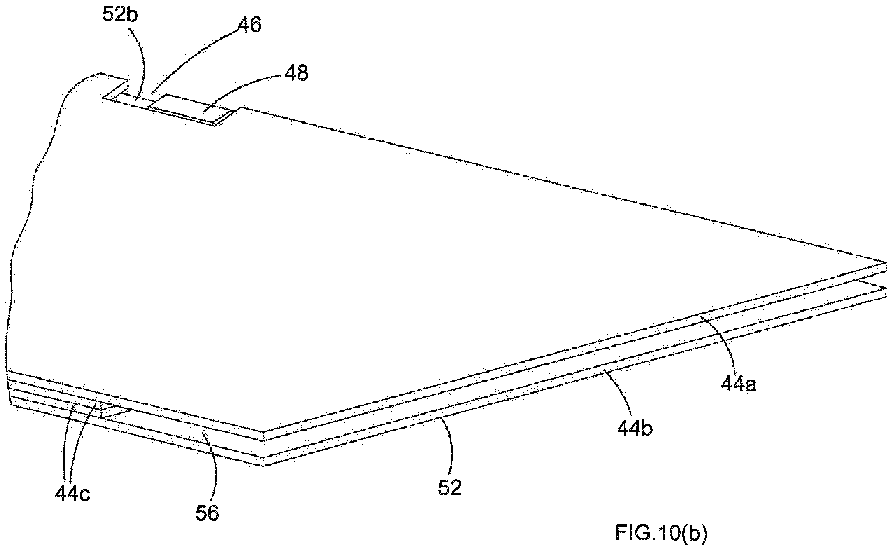

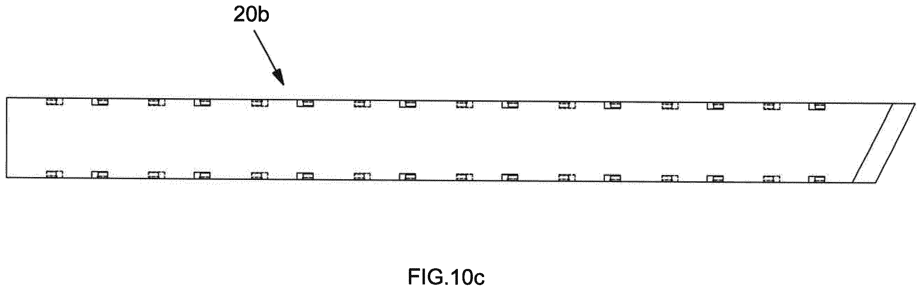

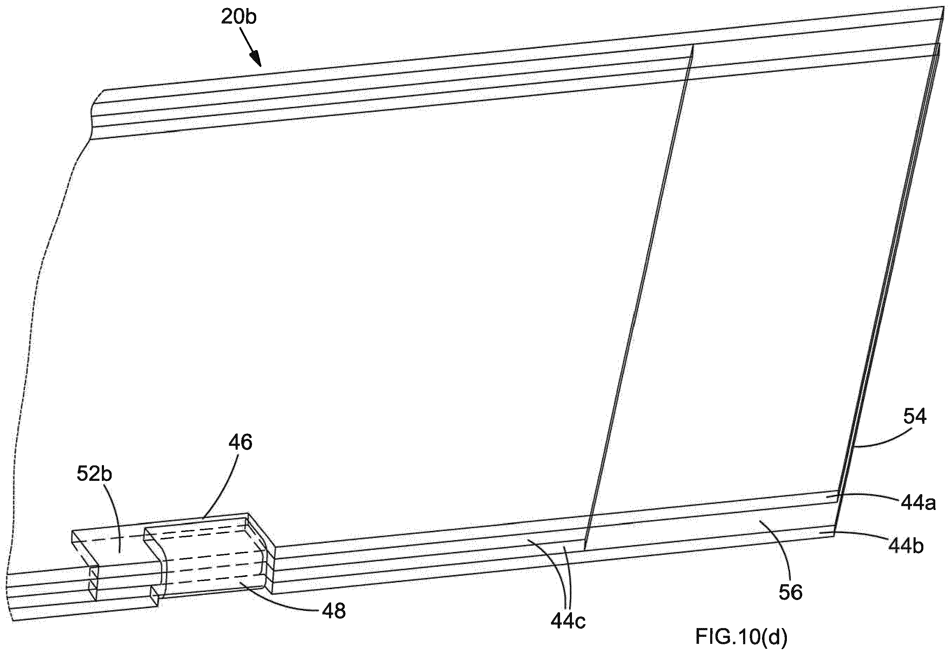

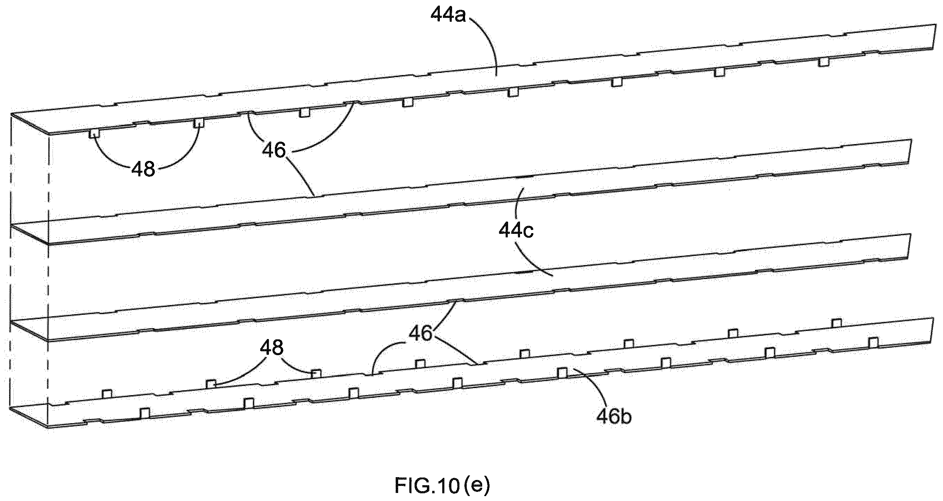

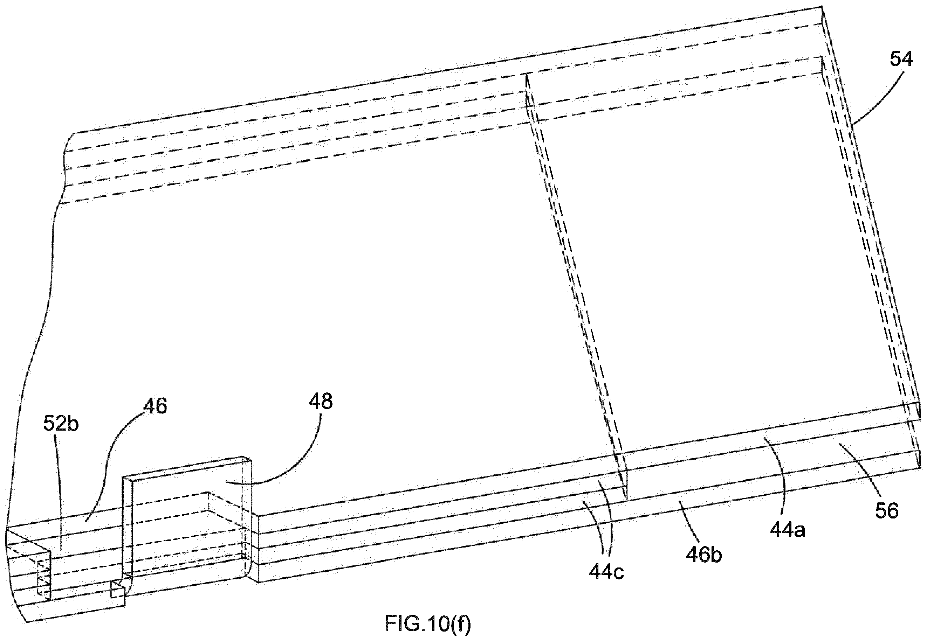

Figures 10 shows a fourth embodiment of the present invention in the form of a flexible blade 20b suitable for use in any embodiment of apparatus 2 described above, the blade 20b comprising four strips 44: a first strip 44a, a second strip 44b, and two central strips 44c. Each of the first and second strips 44a, 44b comprises pluralities of notches 46 and foldable tabs 48 located along each long edge 50 of the first and second strips 44a, 44b. The central strips comprise a plurality of notches 46, around which respective foldable tabs 48 may be folded. To assemble a blade 20, the strips 44 are stacked and the foldable tabs 48 are folded around a respective portion of another strip, such as the notches 46 of central strips 44c, to hold the strips together. Blade 20b is configured to flex about a flexion axis transverse to long axis L of the blade.

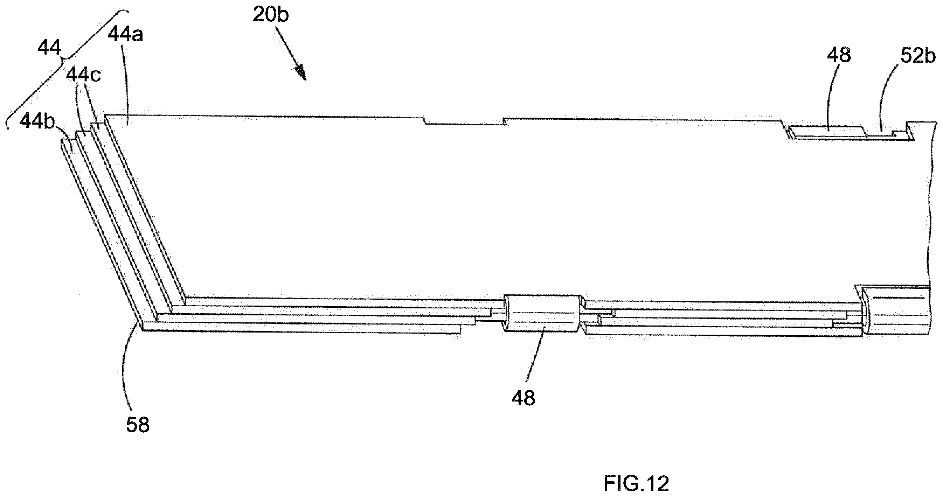

Figure 10(b) shows a close-up view of an assembled blade 20b, wherein a foldable tab 48 can be seen to have been folded about an axis parallel to the long axis L of the blade (Figure 10(a)) around respective notches of two central strips 44c, thereby forming a second-type joint holding the strips 44 together while leaving a gap 52b which facilitates flexion of the assembled blade 20b by allowing relative movement of the assembled strips 44 in directions substantially parallel to long axis L. This gap may also be seen in Figures 10(d), 10(f), and 12.

Figure 10(g) shows an exploded view of all four strips 44 of the blade 20b of Figure 10(a), wherein notches 46 of the central strips 44c, around which foldable tabs 48 are to be folded, can be seen. Shown in both Figures 10(d) and 10(f) is an arrangement of the pluralities of foldable tabs 48 (prior to folding) and notches 46 of the first and second strips 44a, 44b.

Figures 10(d) and 10(f) each show a close-up view of an end 54 of the blade 20b of Figure 10(a), at which a space 56 between the first and second strips 44a, 44b is located. The space 56 is defined by termination of the central strips 44c prior to termination of the first and second strips 44a, 44b, and is arranged to receive a cutting device such as the cutting portion 32.

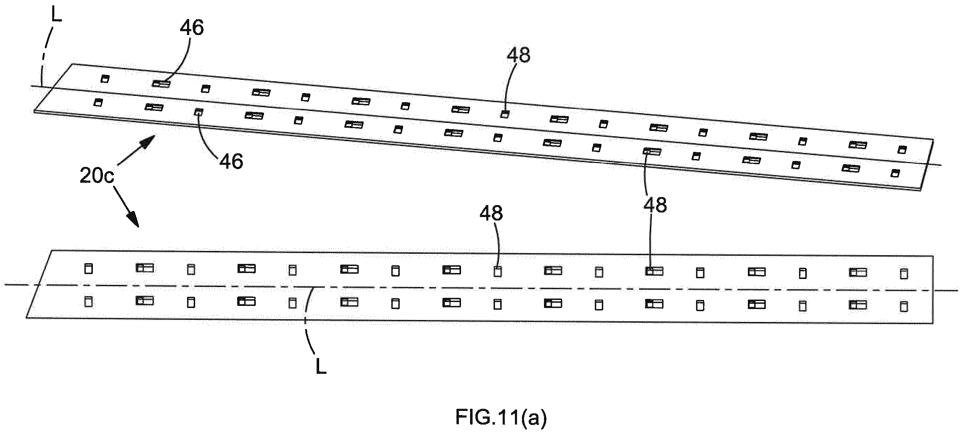

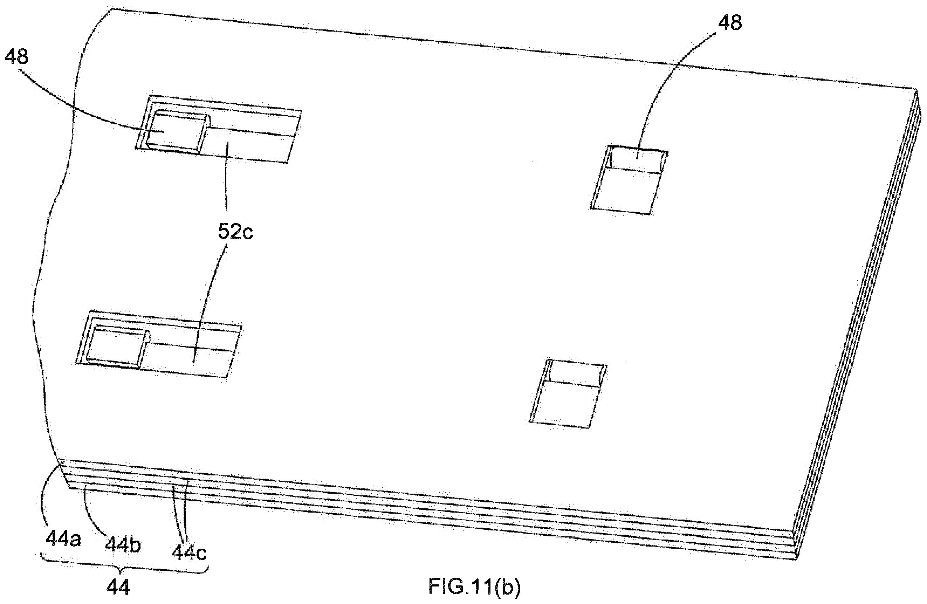

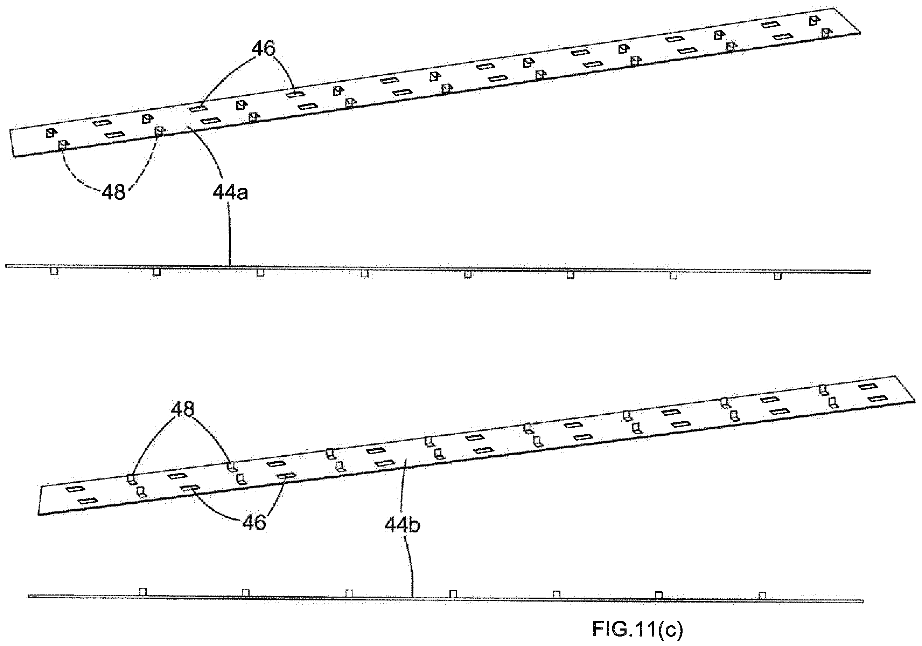

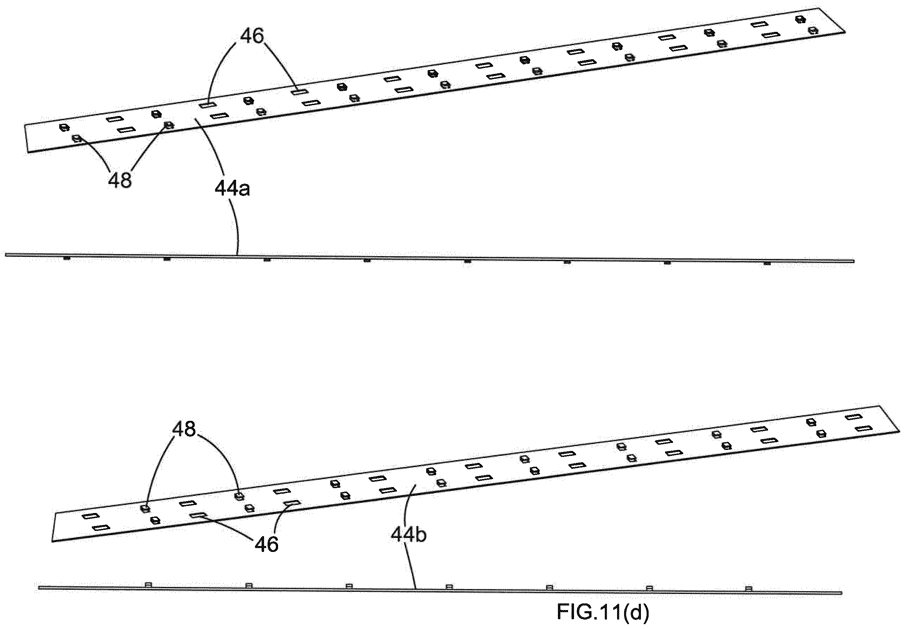

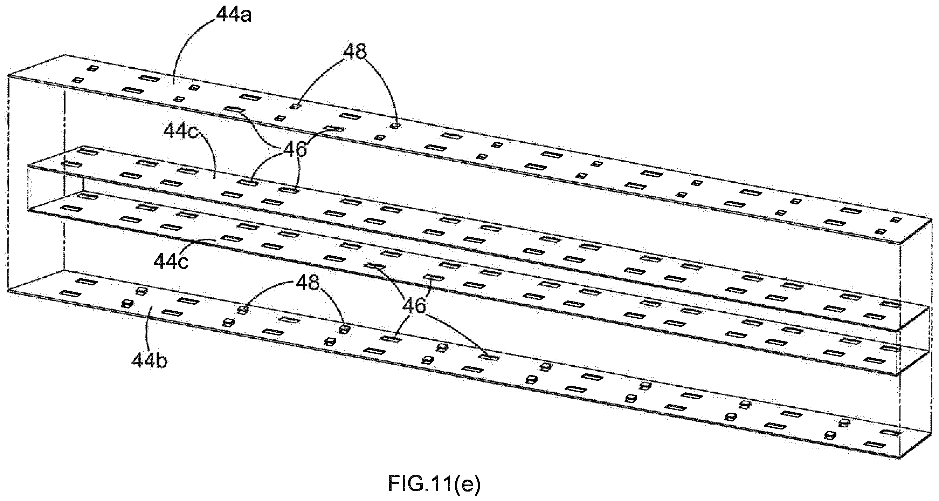

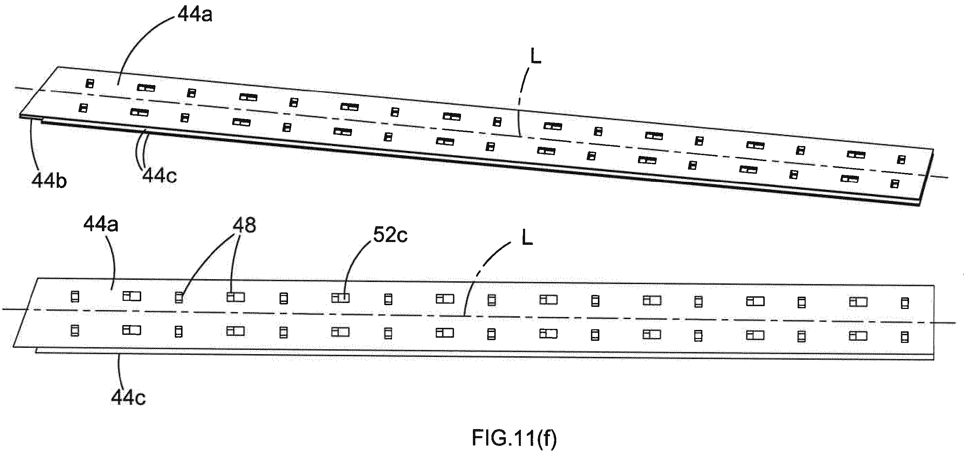

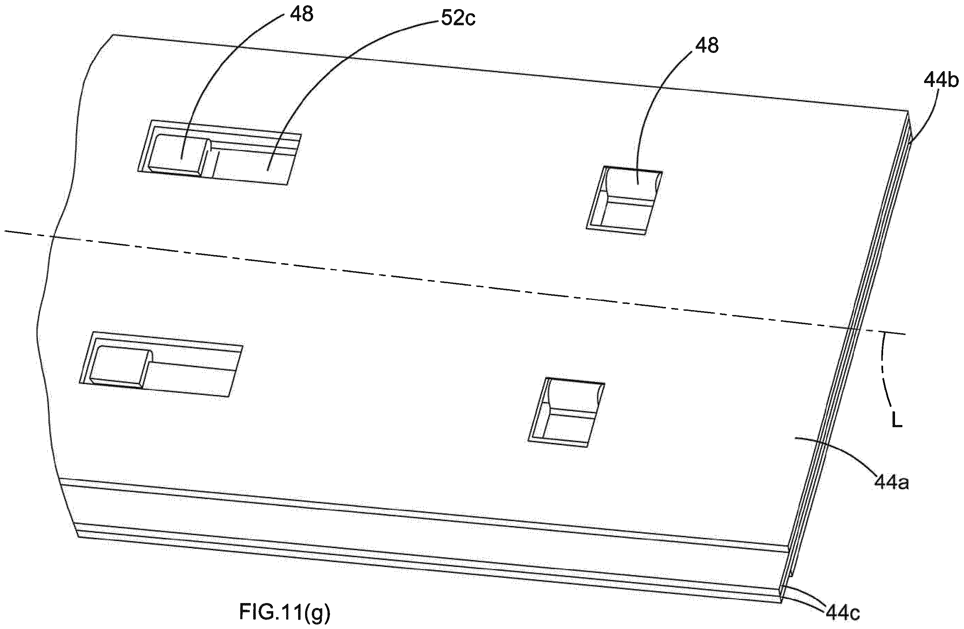

Figure 11 shows a fifth embodiment of the present invention in the form of a flexible blade 20c suitable for use in any embodiment of apparatus 2 described above, the blade 20c comprising four strips 44: a first strip 44a, a second strip 44b, and two central strips 44c. Each of the first and second strips 44a, 44b comprises pluralities of notches 46 and foldable tabs 48 located within the first and second strips 44a, 44b. The central strips comprise a plurality of notches 46, around which respective foldable tabs 48 may be folded. To assemble a blade 20, the strips 44 are stacked and the foldable tabs 48 are folded around a respective portion of another strip, such as the notches 46 of central strips 44c, to hold the strips together. Blade 20c is configured to flex about a flexion axis transverse to long axis L of the blade.

Figure 11(b) shows a close-up view of an assembled blade 20c, wherein foldable tabs 48 can be seen to have been folded about axes parallel to the long axis L of the blade (Figure 11(a)) around respective notches of two central strips 44c, thereby forming second-type joints holding the strips 44 together. A gap 52c is left which facilitates flexion of the assembled blade 20c by allowing relative movement of the assembled strips 44 in directions substantially parallel to long axis L.

Figures 11(c) and 11(d) show the first and second strips 44a, 44b of the blade 20c of Figure 11(a) in respective first and second states, while Figure 11(e) shows an exploded view of all four strips 44 of the blade 20c of Figure 11 (a) in the second state, wherein foldable tabs 46 have been folded and notches 46 of the central strips 44c, around which respective foldable tabs 48 are to engage upon assembly, can be seen. The first state is defined by unfolded foldable tabs 48, while the second state is defined by foldable tabs 48 folded into shapes ready for assembly of strips 44.

Figures 11(f) and 11(g) show the strips 44 arranged in a third, or pre-assembly, state, wherein the strips 44 are stacked so that the pre-folded foldable tabs 48 are slotted into respective notches 48. In this third state, the central strips 44c can be seen to be shifted with respect to strips 44a and 44b in a direction transverse to long axis L. Once the foldable tabs 48 and notches 46 are suitably collocated, the central strips can be translated into an assembled position, so that the blade 20c assumes the assembled state shown in Figures 11(a) and 11(b).

The strips 44 of blade 20c of Figures 11 can be formed into the second state during an annealing stage, then tempered individually prior to assembly. This is due to the arrangement and configuration of the foldable tabs 48 and notches 46, which enables the strips 44 to be slotted into place from the pre-assembly state into the assembled state.

Figure 12 shows a close-up view of a mounting end 58 of the blade 20b of Figure 10(a), at which the strips 44 are staggered. After the strips 44 are assembled together, the cutting portion 32 is fixed at the end 54 in the space 56 of the assembled blade 20, and the strips are fixed relative to one another at that end 54. This fixing may be performed using laser welding, by riveting, or by any other suitable means known to the skilled person. Prior to the installation of the blade 20 in the apparatus 2, at least a part of the blade 20 may be bent into, and held in, a pre-tensioned state along a curve substantially similar or identical to that of the curve of ramp 22. As the strips 44 are fixed relative to one another at end 54, and since the strips 44 are moveable relative to one another as the blade 20 flexes, the ends of the strips at the mounting end 58 of a blade 20 become staggered in the pre-tensioned state, as exemplified by the blade 20b shown in Figure 12. The strips 44 at the mounting end 58 of the blade may then mounted to the mounting plate 18 while staggered. While only blade 20b is shown having staggered strips at mounting end 58 due to the above-described pre-tensioning state, it is to be understood that blade 20a may also be pre-tensioned and mounted with staggered strips in the same or substantially similar manner to that described above.

The embodiments of the invention shown in Figures 9 to 11 may be combined into further embodiments, such as a blade comprising one or more first-type joints and one or more second-type joints. Any of these embodiments, alone or in combination, may be used together with any embodiment of apparatus 2 described above and shown in Figures 1 to 8.

By combining first-type joints and second-type joints into a single blade, sections of the blade that require greater relative flexibility (such as portions that engage with guide means) may include a greater proportion of first-type joints and sections that require lesser relative flexibility may include a greater proportion of second-type joints. The dimensions of the joints, and the other dimensions of the blade or blades, such as length, width, thickness, and material(s) of each strip, may be chosen prior to manufacture.

A non-limiting example of operation of an embodiment of the apparatus 2 will now be described.

In the stored configuration, the apparatus 2 is inserted into a pipe interior of circular cross-section to be cut and located such that the aperture 28 and cutting portions 32 align with a desired part of the pipe wall.

The motor 6 is instructed to rotate the cutting assembly 10 about the rotation axis ROT, and the gearbox-leadscrew assembly 12 is instructed to actuate the mounting frame 8 towards the base portion 24, thereby pushing the blades 20 along their respective ramps 22, causing the portions of the blades 20 engaging the ramps 22 to flex, and radially extending the cutting portions 32 through the aperture 28 towards the pipe wall.

Due to the rotationally symmetrical arrangement of the cutting portions 32 described above, during cutting of the pipe, a centralising restoring force is applied by the pipe walls to the apparatus 2 via the cutting portions 32 to maintain the apparatus 2 in a stable central position within the pipe.

The gearbox-leadscrew assembly 12 is instructed to further actuate the blades 20 as cutting of the pipe wall progresses, thereby extending the cutting portions 32 further into the pipe wall being cut. The cutting radius RCUT, or blade penetration, may be monitored electronically by a user.

Once a desired amount of cutting has been performed, the gearbox-leadscrew assembly 12 is instructed to actuate the mounting frame 8 away from the base portion 24, thereby pulling the blades 20 along their respective ramps 22 and radially retracting the cutting portions 32 back inside the apparatus 2, into the stored configuration, for removal of the apparatus 2 from the pipe interior.

It will be appreciated by those skilled in the art that the above embodiments have been described by way of example only, and not in any limitative sense, and that various alterations and modifications are possible without departing from the scope of the invention as defined by the appended claims.

## Claims

1. An apparatus (2) for cutting pipe, comprising:
drive means (4); and
a cutting assembly (10), comprising:
a first mounting portion (18);
at least one blade (20), mounted to the first mounting portion, the at least one blade comprising a cutting portion (32) at a first end (34) and a flexible portion (36) between the first end and the first mounting portion; and
guide means (22) for guiding the at least one blade, the flexible portion being configured to flex where the flexible portion engages the guide means;
wherein the drive means is configured to:
(i) cause the at least one said blade to rotate about a rotation axis (ROT); and
(ii) move the first mounting portion to cause the at least one blade to move along the guide means between a deployed condition and a retracted condition, wherein each cutting portion in the deployed condition is arranged radially further outwards, in a direction transverse to said rotation axis, than in the retracted condition, **characterised in that** at least one blade comprises a plurality of laminated strips (44) and pluralities of notches (46) and foldable tabs (48) for forming joints between the strips.

2. An apparatus according to claim 1, wherein at least one blade comprises:
a first strip (44a) comprising a plurality of foldable tabs; and
at least one second strip (44b) comprising a plurality of notches;
wherein a plurality of said tabs are configured to engage at least one said second strip by folding around a respective portion of at least one said second strip located in a respective notch to allow limited relative movement of at least part of said strips.

3. An apparatus according to claim 2, wherein the first strip further comprises a plurality of notches; and at least one said second strip further comprises a plurality of foldable tabs.

4. An apparatus according to either of claims 2 and 3, wherein at least one said second strip is a central strip (44c) comprising a plurality of notches, and wherein:
(i) the at least one central strip is located between the first and second strips; and
(ii) at least one foldable tab is configured to fold around a portion of at least one respective notch of a central strip to engage at least one central strip.

5. An apparatus according to any one of claims 2 to 4, wherein, at an end of the blade, the first strip and an adjacent further strip are arranged to define a space (56) therebetween, the space configured to receive a cutting device (32).

6. An apparatus according to any one of claims 2 to 5, wherein the first and further strips are tempered prior to assembly.

7. An apparatus according to any preceding claim, wherein at least one foldable tab is configured to fold about an axis transverse to a longitudinal axis (L) of the blade, thereby forming a first-type joint.

8. An apparatus according to any preceding claim, wherein at least one foldable tab is configured to fold about an axis parallel to a longitudinal axis of the blade, thereby forming a second-type joint.

9. An apparatus according to any preceding claim, wherein, in the retracted condition, at least part of the blade (20) is located behind the rotation axis (ROT) relative to the location of the cutting portion 32 when in the deployed condition.

10. An apparatus according to any preceding claim, wherein the drive means comprises a gearbox (14) and leadscrew (16) for actuating the cutting assembly.

11. An apparatus according to any preceding claim, further comprising a casing (26) comprising at least one aperture (28) for allowing passage of the at least one blade therethrough between the deployed and retracted conditions.

12. An apparatus according to claim 11, further comprising at least one guide rail (38) for coupling the cutting assembly to an interior of the casing.

13. An apparatus according to any preceding claim, comprising a plurality of said blades arranged substantially symmetrically relative to the rotation axis.

## Patentansprüche

1. Eine Vorrichtung (2) zum Schneiden von Rohren, umfassend:
Antriebsmittel (4) und
eine Schneideinheit (10), umfassend:
einen ersten Befestigungsbereich (18);
mindestens ein Messer (20), das an dem ersten Befestigungsbereich befestigt ist, wobei das mindestens eine Messer einen Schneidbereich (32) an einem ersten Ende (34) und einen flexiblen Bereich (36) zwischen dem ersten Ende und dem ersten Befestigungsbereich umfasst; und
Führungsmittel (22) zum Führen des mindestens einen Messers, wobei der flexible Bereich eingerichtet ist sich zu verbiegen, wo der flexible Bereich in die Führungsmittel eingreift;
wobei das Antriebsmittel dazu eingerichtet ist:
(i) das mindestens eine besagte Messer zu veranlassen, sich um eine Rotationachse (ROT) zu drehen; und
(ii) den ersten Befestigungsbereich zu bewegen, um das mindestens eine Messer zu veranlassen, sich entlang der Führungsmittel zwischen einem ausgefahrenen Zustand und einem eingezogenen Zustand zu bewegen, wobei jeder Schneidbereich in dem ausgefahrenen Zustand radial weiter außen, in einer Richtung quer zu der besagten Rotationachse, als in dem eingezogenen Zustand, angeordnet ist,
**dadurch gekennzeichnet, dass** mindestens ein Messer eine Mehrzahl von laminierten Leisten (44) und Mehrzahlen von Kerben (46) und faltbaren Rasten (48) zum Bilden von Verbindungen zwischen den Leisten aufweist.

2. Eine Vorrichtung nach Anspruch 1, wobei das mindestens eine Messer umfasst:
eine erste Leiste (44a), die ein Mehrzahl von faltbaren Rasten umfasst; und
mindestens eine zweite Leiste (44b), die eine Mehrzahl von Kerben umfasst;
wobei eine Mehrzahl von besagten Rasten dazu eingerichtet ist, in mindestens eine besagte zweite Leiste einzugreifen durch Faltung um einen entsprechenden Bereich von mindestens einer besagten zweiten Leiste, der in einer entsprechenden Kerbe angeordnet ist, um eine begrenzte relative Bewegung von mindestens einem Teil der besagten Leisten zu gestatten.

3. Eine Vorrichtung nach Anspruch 2, wobei die erste Leiste ferner eine Mehrzahl von Kerben umfasst; und mindestens eine besagte zweite Leiste ferner eine Mehrzahl von faltbaren Rasten umfasst.

4. Eine Vorrichtung nach einem der Ansprüche 2 oder 3, wobei mindestens eine besagte zweite Leiste eine zentrale Leiste (44c) ist, die eine Mehrzahl von Kerben umfasst, und wobei:
(i) die mindestens eine zentrale Leiste zwischen den ersten und zweiten Leisten angeordnet ist; und
(ii) mindestens eine faltbare Raste dazu eingerichtet ist, sich um einen Bereich von mindestens einer entsprechenden Kerbe einer zentralen Leiste zu falten, um in mindestens eine zentrale Leiste einzugreifen.

5. Eine Vorrichtung nach einem der Ansprüche 2 bis 4, wobei an einem Ende des Messers die erste Leiste und eine benachbarte weitere Leiste angeordnet sind, um einen Zwischenraum (56) dazwischen zu definieren, wobei der Zwischenraum dazu eingerichtet ist, um eine Schneideinrichtung (32) aufzunehmen.

6. Eine Vorrichtung nach einem der Ansprüche 2 bis 5, wobei die ersten und weiteren Leisten vordem Zusammenbau gehärtet werden.

7. Eine Vorrichtung nach einem der vorstehenden Ansprüche, wobei mindestens eine faltbare Raste dazu eingerichtet ist, sich um eine Achse quer zu einer Längsachse (L) des Messers zu falten, und dabei eine Verbindung eines ersten Typs bildet.

8. Eine Vorrichtung nach einem der vorstehenden Ansprüche, wobei mindestens eine faltbare Raste dazu eingerichtet ist, sich um eine Achse parallel zu einer Längsachse des Messers zu falten, und dabei eine Verbindung eines zweiten Typs bildet.

9. Eine Vorrichtung nach einem der vorstehenden Ansprüche, wobei in dem eingezogenen Zustand mindestens ein Teil des Messers (20) hinter der Rotationachse (ROT) relativ zu der Position des Schneidbereichs (32), wenn es in dem ausgefahrenen Zustand ist, angeordnet ist.

10. Eine Vorrichtung nach einem der vorstehenden Ansprüche, wobei das Antriebsmittel ein Getriebe (14) und eine Getriebespindel (16) zum Betätigen der Schneideinheit umfasst.

11. Eine Vorrichtung nach einem der vorstehenden Ansprüche, ferner umfassend ein Gehäuse (26), das mindestens eine Öffnung (28) umfasst, um dem mindestens einen Messer einen Durchgang dadurch zwischen dem ausgefahrenen und dem eingezogenen Zustand zu gestatten.

12. Eine Vorrichtung nach Anspruch 11, ferner umfassend mindestens eine Führungsschiene (38) zum Koppeln der Schneideinheit an ein Inneres des Gehäuses.

13. Eine Vorrichtung nach einem der vorstehenden Ansprüche, umfassend eine Mehrzahl von besagten Messern, die im Wesentlichen symmetrisch relativ zu der Rotationachse angeordnet sind.

## Revendications

1. Appareil (2) pour couper un tuyau, comprenant :
un moyen d'entraînement (4) ; et
un ensemble de coupe (10), comprenant :
une première partie de montage (18) ;
au moins une lame (20), montée sur la première partie de montage, l'au moins une lame comprenant une partie de coupe (32) au niveau d'une première extrémité (34) et une partie flexible (36) entre la première extrémité et la première partie de montage ; et
un moyen de guidage (22) pour guider l'au moins une lame, la partie flexible étant configurée pour se fléchir lorsque la partie flexible s'engage avec le moyen de guidage ;
dans lequel le moyen d'entraînement est configuré :
(i) pour faire tourner ladite au moins une lame autour d'un axe de rotation (ROT) ; et
(ii) pour déplacer la première partie de montage pour amener l'au moins une lame à se déplacer le long du moyen de guidage entre un état déployé et un état rétracté, où chaque partie de coupe dans l'état déployé est agencée radialement davantage vers l'extérieur, dans une direction transversale audit axe de rotation, que dans l'état rétracté,
**caractérisé en ce que** l'au moins une lame comprend une pluralité de bandes stratifiées (44) et des pluralités d'encoches (46) et de languettes pliables (48) pour former des joints entre les bandes.

2. Appareil selon la revendication 1, dans lequel l'au moins une lame comprend :
une première bande (44a) comprenant une pluralité de languettes pliables ; et
au moins une deuxième bande (44b) comprenant une pluralité d'encoches ;
dans lequel une pluralité desdites languettes sont configurées pour s'engager avec ladite au moins une deuxième bande par pliage autour d'une partie respective de ladite au moins une deuxième bande située dans une encoche respective pour permettre un mouvement relatif limité d'au moins une partie desdites bandes.

3. Appareil selon la revendication 2, dans lequel la première bande comprend en outre une pluralité d'encoches ; et ladite au moins une deuxième bande comprend en outre une pluralité de languettes pliables.

4. Appareil selon l'une des revendications 2 et 3, dans lequel ladite au moins une deuxième bande est une bande centrale (44c) comprenant une pluralité d'encoches, et dans lequel :
(i) l'au moins une bande centrale est située entre les première et deuxième bandes ; et
(ii) l'au moins une languette pliable est configurée pour se plier autour d'une partie de l'au moins une encoche respective d'une bande centrale pour s'engager avec l'au moins une bande centrale.

5. Appareil selon l'une quelconque des revendications 2 à 4, dans lequel, au niveau d'une extrémité de la lame, la première bande et une bande supplémentaire adjacente sont agencées pour définir un espace (56) entre elles, l'espace étant configuré pour recevoir un dispositif de coupe (32).

6. Appareil selon l'une quelconque des revendications 2 à 5, dans lequel la première bande et la bande supplémentaire sont trempées avant l'assemblage.

7. Appareil selon l'une des revendications précédentes, dans lequel l'au moins une languette pliable est configurée pour se plier autour d'un axe transversal à un axe longitudinal (L) de la lame, formant ainsi un joint de premier type.

8. Appareil selon l'une des revendications précédentes, dans lequel l'au moins une languette pliable est configurée pour se plier autour d'un axe parallèle à un axe longitudinal de la lame, formant ainsi un joint de deuxième type.

9. Appareil selon l'une des revendications précédentes, dans lequel, dans l'état rétracté, au moins une partie de la lame (20) est située derrière l'axe de rotation (ROT) par rapport à l'emplacement de la partie de coupe (32) lorsqu'elle est dans l'état déployé.

10. Appareil selon l'une des revendications précédentes, dans lequel le moyen d'entraînement comprend une boîte à engrenages (14) et une vis mère (16) pour actionner l'ensemble de coupe.

11. Appareil selon l'une des revendications précédentes, comprenant en outre un boîtier (26) comprenant au moins une ouverture (28) pour permettre le passage de l'au moins une lame à travers celui-ci entre les états déployé et rétracté.

12. Appareil selon la revendication 11, comprenant en outre au moins un rail de guidage (38) pour coupler l'ensemble de coupe à un intérieur du boîtier.

13. Appareil selon l'une des revendications précédentes, comprenant une pluralité desdites lames agencées de manière essentiellement symétrique par rapport à l'axe de rotation.
